# EUROPÄISCHE PATENTSCHRIFT

(11) **EP 1 518 091 B1**
(45) Veröffentlichungstag und Bekanntmachung des Hinweises auf die Patenterteilung: **09.08.2006**
(21) Anmeldenummer: 04741749.8
(22) Anmeldetag: 08.06.2004
(51) Int. Cl.: G01C 19/56

(54) **DREHRATENSENSOR MIT EINEM VIBRATIONSKREISEL**
ROTATION RATE SENSOR COMPRISING A VIBRATION GYROSCOPE
CAPTEUR DE VITESSE DE ROTATION POURVU D'UN GYROSCOPE VIBRANT

(30) Priorität: 30.06.2003 DE 10329510
(43) Veröffentlichungstag der Anmeldung: 30.03.2005
(73) Patentinhaber: SIEMENS AKTIENGESELLSCHAFT, 80333 München (DE)
(72) Erfinder: MORELL, Heinz-Werner, 67659 Kaiserslautern (DE)
(86) Internationale Anmeldenummer: PCT/EP2004/051055
(87) Internationale Veröffentlichungsnummer: WO 2005/001384

(56) Entgegenhaltungen:
- EP-A- 0 638 811
- US-A- 5 617 176
- PATENT ABSTRACTS OF JAPAN Bd. 1996, Nr. 11, 29. November 1996 (1996-11-29) & JP 8 178668 A (NISSAN MOTOR CO LTD), 12. Juli 1996 (1996-07-12)

## Beschreibung

Die Erfindung betrifft einen Drehratensensor mit einem Vibrationskreisel, der Teil mindestens eines Regelkreises ist, der den Vibrationskreisel durch Zuführung eines Erregersignals mit seiner Eigenfrequenz erregt, wobei dem Vibrationskreisel ein Ausgangssignal entnehmbar ist, aus dem ein mit Rauschen behaftetes Drehratensignal abgeleitet wird.

US 5,617,176 betrifft einen Rütteldetektor für Kameras, mit dem das sogenannte Verwackeln von Bildern vermieden werden soll. Darin ist auch ein Drehratensensor enthalten. Signale des Detektors werden über ein adaptives Hochpassfilter geleitet.

JP-A-8 178668 beschreibt die Reduzierung eines Offsets in einem Drehratensensor-Signal, der durch Vibration entsteht, mit Hilfe eines Bandpassfilters, aus dessen Ausgangssignal ein Drehratensignal erzeugt wird, und mit Hilfe eines Vergleichs eines gegebenen Schwellwertsignals mit dem Ausgangssignal einer Glättungsschaltung zum Bewerten der Größe der störenden Vibration.

Ferner ist durch EP 0 638 811 A2 eine Einrichtung zur Schätzung der Amplitude und Frequenz eines mit Störungen behafteten Sinussignals bekannt geworden, die unter anderem auch für das Signal eines Drehratensensors vorgesehen ist. Dabei wird dieses Signal nach einer Synchrondemodulation über ein Tiefpassfilter geleitet, das zu Beeinträchtigungen des Signals bei schnell veränderlichen Drehraten führt.

Bei Drehratensensoren mit einem Vibrationskreisel ist das die Drehrate anzeigende von der Corioliskraft bewirkte Ausgangssignal mit Rauschen behaftet, wodurch eine spätere Auswertung beeinträchtigt wird. Aufgabe der Erfindung ist es, das Drehratensignal möglichst vom Rauschen zu befreien und trotzdem schnelle Änderungen des Drehratensignals zu ermöglichen.

Diese Aufgabe wird erfindungsgemäß gelöst durch ein Tiefpassfilter mit steuerbarer Bandbreite und ein Bandpassfilter, wobei das Tiefpassfilter und das Bandpassfilter so angeordnet sind, dass das mit Rauschen behaftete Drehratensignal Eingängen dieses Tiefpassfilters und dieses Bandpassfilters zugeführt wird und dass der Ausgang des Bandpassfilters über eine Schwellwertschaltung mit einem Steuereingang des Tiefpassfilters verbunden ist.

Das Bandpassfilter stellt sicher, dass die Schwellwertschaltung nur auf Änderungen des Drehratensignals anspricht. Des Weiteren wird der Rauschanteil am Eingang der Schwellwertschaltung durch das vorgeschaltete Bandpassfilter reduziert.

Bei dem erfindungsgemäßen Drehratensensor wird bei konstantem oder langsam verändertem Drehratensignal das Rauschen durch das Tiefpassfilter weitgehend unterdrückt. Liegt jedoch eine schnellere Änderung des Drehratensignals vor, wird die Bandgrenze des Tiefpassfilters erhöht, so dass auch die schnelle Änderung weitergeleitet wird, wobei kurzfristig ein entsprechender Rauschanteil in Kauf genommen wird.

Vorzugsweise ist bei dem erfindungsgemäßen Drehratensensor vorgesehen, dass zwischen der Schwellwertschaltung und dem Steuereingang des Tiefpassfilters ein Bandselektor angeordnet ist, der nach einem Übergang des Ausgangssignals der Schwellwertschaltung einen allmählichen Übergang des dem Steuereingang des Tiefpassfilters zugeführten Signals erzeugt. Die Übergangszeit ist in beiden Richtungen einstellbar, d.h. von niedriger Bandbreite des Tiefpassfilters zu hoher Bandbreite und umgekehrt. Damit werden Störungen im Drehratensignal durch ein plötzliches Umschalten des Tiefpassfilters vermieden.

Eine vorteilhafte Ausgestaltung des erfindungsgemäßen Drehratensensors besteht darin, dass das Bandpassfilter so angeordnet ist, dass es Änderungen des Drehratensignals durchlässt, die schneller als die vom Tiefpassfilter mit geringster eingestellter Bandbreite durchgelassenen Änderungen sind und die höchstens so schnell wie die schnellsten durch die Drehung des Vibrationskreisels bedingten Änderungen sind. Damit ist sichergestellt, dass die Bandbreite des Tiefpassfilters bei Bedarf erhöht wird, dass jedoch höherfrequentes Rauschen nicht die Steuerung des Tiefpassfilters beeinflusst.

Damit das Tiefpassfilter sowohl bei positiven als auch bei negativen Änderungen des Drehratensignals entsprechend angesteuert wird, ist bei einer anderen vorteilhaften Ausgestaltung vorgesehen, dass die Schwellwertschaltung so angeordnet ist, dass ein Ausgangssignal der Schwellwertschaltung einen ersten Pegel einnimmt, wenn der Betrag des Ausgangssignals des Bandpassfilters kleiner als eine vorgegebene Schwelle ist, und darüber hinaus einen zweiten Pegel einnimmt.

Die Erfordernisse an den Drehratensensor, beispielsweise der Drehratenmessbereich oder das Signal-zu-Rausch-Verhältnis, können von Anwendungsfall zu Anwendungsfall verschieden sein. Deshalb ist gemäß einer Weiterbildung vorgesehen, dass die Bandgrenzen des Bandpassfilters und die Schwelle der Schwellwertschaltung programmierbar sind. Dabei können auch die Grenzen des Einstellbereichs des Tiefpassfilt ers und die Übergangszeit von der geringsten zur höchsten Grenze und die Übergangszeit von der höchsten zur geringsten Bandbreite programmierbar sein.

Die Erfindung lässt zahlreiche Ausführungsformen zu. Eine davon ist schematisch in der Zeichnung anhand mehrerer Figuren dargestellt und nachfolgend beschrieben. Es zeigt:
- Figur 1: ein Blockschaltbild eines Drehratensensors mit einem Filter und
- Figur 2: eine detailliertere Darstellung des Filters.

Das Ausführungsbeispiel sowie Teile davon sind zwar als Blockschaltbilder dargestellt. Dieses bedeutet jedoch nicht, dass die erfindungsgemäße Anordnung auf eine Realisierung mit Hilfe von einzelnen den Blöcken entsprechenden Schaltungen beschränkt ist. Die erfindungsgemäße Anordnung ist vielmehr in besonders vorteilhafter Weise mit Hilfe von hochintegrierten Schaltungen realisierbar, z.B. Digital-Signal-Processing. Es können auch Mikroprozessoren eingesetzt werden, welche bei geeigneter Programmierung die in den Blockschaltbildern dargestellten Verarbeitungsschritte durchführen.

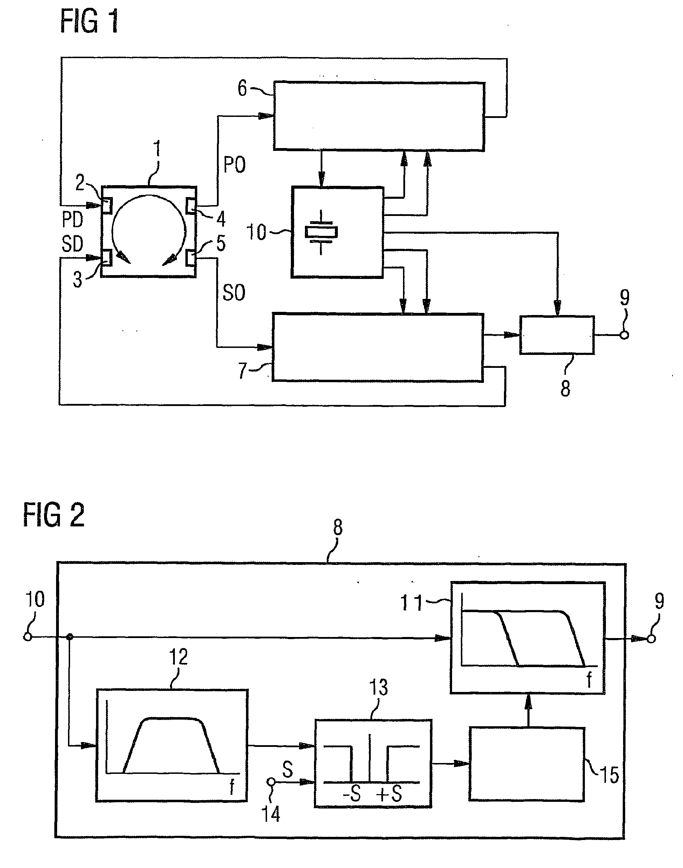

Figur 1 zeigt ein Blockschaltbild einer Anordnung mit einem Vibrationskreisel 1 mit zwei Eingängen 2, 3 für ein primäres Erregersignal PD und ein sekundäres Erregersignal SD. Die Erregung erfolgt durch geeignete Wandler, beispielsweise elektromagnetische. Der Vibrationskreisel weist ferner zwei Ausgänge 4, 5 für ein primäres Ausgangssignal PO und ein sekundäres Ausgangssignal SO auf. Diese Signale geben die jeweilige Vibration an räumlich versetzten Stellen des Kreisels wieder. Derartige Kreisel sind beispielsweise aus EP 0 307 321 A1 bekannt und beruhen auf der Wirkung der Corioliskraft.

Der Vibrationskreisel 1 stellt ein FiLter hoher Güte dar, wobei die Strecke zwischen dem Eingang 2 und dem Ausgang 4 Teil eines primären Regelkreises 6 und die Strecke zwischen dem Eingang 3 und dem Ausgang 5 Teil eines sekundären Regelkreises 7 ist. Der primäre Regelkreis 6 dient zur Anregung von Schwingungen mit der Resonanzfrequenz des Vibrationskreisels von beispielsweise 14 kHz. Die Anregung erfolgt dabei in einer Achse des Vibrationskreisels, zu welcher die für den sekundären Regelkreis benutzte Schwingungsrichtung um 90° versetzt ist. Im sekundären Regelkreis 7 wird das Signal SO in eine Inphase-Komponente und eine Quadratur-Komponente aufgespalten, von denen eine über ein Filter 8 einem Ausgang 9 zugeleitet wird, von welchem ein der Drehrate proportionales Signal abnehmbar ist.

In beiden Regelkreisen 6, 7 erfolgt ein wesentlicher Teil der Signalverarbeitung digital. Die zur Signalverarbeitung erforderlichen Taktsignale werden in einem quarzgesteuerten digitalen Frequenz-Synthesizer 10 erzeugt, dessen Taktfrequenz im dargestellten Beispiel 14,5 MHz beträgt. Von einer Erläuterung weiterer Einzelheiten wird abgesehen, da diese zum Verständnis des Ausführungsbeispiels nicht erforderlich ist.

Figur 2 zeigt das Filter 8 in detaillierterer Darstellung. Im Weg des Drehratensignals von einem Eingang 10 zum Ausgang 9 liegt ein steuerbares Tiefpassfilter 11. Das mit Rauschen behaftete Drehratensignal wird ferner einem Bandpassfilter 12 zugeleitet, dessen Ausgang mit einer Schwellwertschaltung 13 verbunden ist, welche den Betrag des Ausgangssignals des Bandpassfilters 12 mit einem bei 14 zugeführten Schwellwert S vergleicht. Der Ausgang der Schwellwertschaltung 13 ist mit einem Bandselektor 15 verbunden, welcher das Tiefpassfilter 11 derart steuert, dass nach einem Übergang des Ausgangssignals der Schwellwertschaltung 13 eine Veränderung der Grenzfrequenz des Tiefpassfilterrs 11 in einer vorgegebenen Zeit erfolgt. Diese Zeit kann für unterschiedliche Richtungen unterschiedlich vorgegeben sein.

Zum besseren Verständnis der Erfindung sind in Figur 2 die Amplitudenfrequenzgänge des Tiefpassfilters 11 und des Bandpassfilters 12 sowie die Charakteristik der Schwellwertschaltung 13 schematisch wiedergegeben. Wie bereits erwähnt, sind die Frequenzbereiche von jeweiligen Anwendungen abhängig, bei einer Anwendung im Kraftfahrzeug im Wesentlichen vom Drehratensignal-Rauschanteil und der mechanischen Trägheit des Fahrzeugs.

## Patentansprüche

1. Drehratensensor mit einem Vibrationskreisel (1), der Teil mindestens eines Regelkreises (6, 7) ist, der den Vibrationskreisel (1) durch Zuführung eines Erregersignals mit seiner Eigenfrequenz erregt, wobei dem Vibrationskreisel (1) ein Ausgangssignal entnehmbar ist, aus dem ein mit Rauschen behaftetes Drehratensignal abgeleitet wird, **gekennzeichnet durch** ein Tiefpassfilter (11) mit steuerbarer Bandbreite und ein Bandpassfilter (12), wobei das Tiefpassfilter und das Bandpassfilter so angeordnet sind, dass das mit Rauschen behaftete Drehratensignal Eingängen dieses Tiefpassfilters (11) und dieses Bandpassfilters (12) zugeführt wird und dass der Ausgang des Bandpassfilters (12) über eine Schwellwertschaltung (13) mit einem Steuereingang des Tiefpassfilters (11) verbunden ist.

2. Drehratensensor nach Anspruch 1, **dadurch gekennzeichnet, dass** zwischen der Schwellwertschaltung (13) und dem Steuereingang des Tiefpassfilters (11) ein Bandselektor (15) angeordnet ist, der nach einem Übergang des Ausgangssignals der Schwellwertschaltung (13) einen allmählichen Übergang des dem Steuereingang des Tiefpassfilters (11) zugeführten Signals erzeugt.

3. Drehratensensor nach einem der Ansprüche 1 oder 2, **dadurch gekennzeichnet, dass** das Bandpassfilter (12) so angeordnet ist, dass es Änderungen des Drehratensignals durchlässt, die schneller als die vom Tiefpassfilter (11) mit geringster eingestellter Bandbreite durchgelassenen Änderungen sind und die höchstens so schnell wie die schnellsten durch die Drehung des Vibrationskreisels (1) bedingten Änderungen sind.

4. Drehratensensor nach einem der vorhergehenden Ansprüche, **dadurch gekennzeichnet , dass** die Schwellwertschaltung (13) so angeordnet ist, dass ein Ausgangssignal der Schwellwertschaltung (13) einen ersten Pegel einnimmt, wenn der Betrag des Ausgangssignals des Bandpassfilters (12) kleiner als eine vorgegebene Schwelle ist, und darüber hinaus einen zweiten Pegel einnimmt.

5. Drehratensensor nach einem der vorhergehenden Ansprüche, **dadurch gekennzeichnet , dass** die Bandgrenzen des Bandpassfilters (12) und die Schwelle der Schwellwertschaltung (13) programmierbar sind.

6. Drehratensensor nach Anspruch 5, **dadurch gekennzeichnet, dass** ferner die Grenzen des Einstellbereichs des Tiefpassfilters (11) und die Übergangszeit von der geringsten zur höchsten Grenze und die Übergangszeit von der höchsten zur geringsten Bandbreite programmierbar sind.

## Claims

1. Rotation rate sensor having a vibrational gyroscope (1) which is part of at least one control loop (6,7) which excites the vibrational gyroscope (1) by supplying an excitation signal at its natural frequency, the vibrational gyroscope (1) providing an output signal from which a noisy rotation rate signal is derived, **characterized by** a low-pass filter (11) with a controllable bandwidth and a bandpass filter (12), the low-pass filter and the bandpass filter being arranged such that the noisy rotation rate signal is supplied to inputs on this low-pass filter (11) and on this bandpass filter (12), and such that the output of the bandpass filter (12) is connected to a control input on the low-pass filter (11) via a threshold value circuit (13).

2. Rotation rate sensor according to Claim 1, **characterized in that** the threshold value circuit (13) and the control input of the low-pass filter (11) have a band selector (15) arranged between them which follows a transition in the output signal from the threshold value circuit (13) by producing a gradual transition in the signal which is supplied to the control input of the low-pass filter (11).

3. Rotation rate sensor according to either of Claims 1 and 2, **characterized in that** the bandpass filter (12) is arranged such that it lets through changes in the rotation rate signal which are faster than the changes let through by the low-pass filter (11) with a minimally set bandwidth and are at most as fast as the fastest changes caused by the rotation of the vibrational gyroscope (1).

4. Rotation rate sensor according to one of the preceding claims, **characterized in that** the threshold value circuit (13) is arranged such that an output signal from the threshold value circuit (13) adopts a first level when the absolute value of the output signal from the bandpass filter (12) is below a prescribed threshold, and also adopts a second level.

5. Rotation rate sensor according to one of the preceding claims, **characterized in that** the band limits of the bandpass filter (12) and the threshold of the threshold value circuit (13) are programmable.

6. Rotation rate sensor according to Claim 5, **characterized in that** the limits of the adjustment range of the low-pass filter (11) and the transition time from the lowest to the highest limit and the transition time from the highest to the lowest bandwidth are also programmable.

## Revendications

1. Capteur du taux de rotation comportant un gyroscope à vibrations (1), qui fait partie d'au moins un circuit de régulation (6, 7), lequel excite le gyroscope à vibrations (1) avec sa propre fréquence en lui appliquant un signal d'excitation, où un signal de sortie peut être prélevé du gyroscope à vibrations (1), signal de sortie à partir duquel on déduit un signal de taux de rotation entaché de bruit, **caractérisé par** un filtre passe-bas (11), dont la largeur de bande est réglable, et un filtre passe-bande (12), où le filtre passe-bas et le filtre passe-bande sont disposés de telle manière que le signal de taux de rotation entaché de bruit est appliqué à des entrées de ce filtre passe-bas (11) et de ce filtre passe-bande (12) et que la sortie du filtre passe-bande (12) est reliée, par l'intermédiaire d'un circuit de seuil (13), à une entrée de commande du filtre passe-bas (11).

2. Capteur du taux de rotation selon la revendication 1 **caractérisé en ce que,** entre le circuit de seuil (13) et l'entrée de commande du filtre passe-bas (11), est disposé un sélecteur de bande (15) qui produit, après une fluctuation du signal de sortie du circuit de seuil (13), une fluctuation graduelle du signal appliqué à l'entrée de commande du filtre passe-bas (11).

3. Capteur du taux de rotation selon l'une des revendications 1 ou 2 **caractérisé en ce que** le filtre passe-bande (12) est disposé de telle manière qu'il laisse passer des modifications du signal de taux de rotation qui sont plus rapides que les modifications que le filtre passe-bas (11) laisse passer lorsque sa largeur de bande est réglée sur la valeur la plus faible et qui sont au maximum aussi rapides que les modifications les plus rapides dues à la rotation du gyroscope à vibrations (1).

4. Capteur du taux de rotation selon l'une des revendications précédentes **caractérisé en ce que** le circuit de seuil (13) est disposé de telle manière qu'un signal de sortie du circuit de seuil (13) est réglé sur un premier niveau, lorsque la valeur du signal de sortie du filtre passe-bande (12) est inférieure à un seuil donné, et sinon, il est réglé sur un deuxième niveau.

5. Capteur du taux de rotation selon l'une des revendications précédentes **caractérisé en ce que** les limites de fréquence du filtre passe-bande (12) et le seuil du circuit de seuil (13) sont programmables.

6. Capteur du taux de rotation selon la revendication 5 c a - ractérisé en ce q u e , en outre, les limites de la plage de réglage du filtre passe-bas (11) et la durée de la transition entre la limite la plus faible et la limite la plus élevée et la durée de la transition entre la largeur de bande la plus élevée et la largeur de bande la plus faible sont programmables.
